# EUROPEAN PATENT APPLICATION

(11) **EP 1 128 309 A2**
(43) Date of publication of application: **29.08.2001**
(21) Application number: 01650019.1
(22) Date of filing: 16.02.2001
(51) Int. Cl.: G06F 17/60

(54) **Transaction processing**

(30) Priority: 16.02.2000 IE 000128
(71) Applicant: Broadcom Eireann Research Limited, Dublin 2 (IE)
(72) Inventor: Kennedy, James, c/o Broadcom Eireann Research Ltd, Dublin 2 (IE)
(74) Representative: Weldon, Michael James

(57) **Abstract**

A host server has a macro recorder (40) which records an action to be performed on behalf of a user. The action is saved to a database (41). Recording may be performed during communication with a remote ASP in which the sequence is saved rather than being submitted to the ASP. The action is triggered by an ASP transmitting a notification for the user to the host, and the host recognising a trigger in the notification according to a stored rule.

## Description

### Field of the Invention

The invention relates to transaction processing in a wide area network such as the Internet. In the specification the term "transaction" is intended to cover not only specific financial transactions, but also any action involving an interaction on the World Wide Web.

### Prior Art Discussion

Development of the Internet has been very rapid in recent years and people are becoming increasingly confident using it to conduct commerce such as purchasing airline tickets.

However, one of the problems or obstacles associated with such use of the Internet is the sheer volume of available services and information generated. It is often not practical for a user to monitor available services sufficiently often to avail of the information, service, or product which suit him or her best. For, example, if one wishes to monitor stock prices, the servers which provide the information either do not provide exactly the information required, or provide it in the wrong medium. In another example, a user may not be in a position to avail of a low-cost airline ticket in the short time during which it is available.

Therefore, the invention is directed towards providing a transaction processing method and system to address these problems.

### SUMMARY OF THE INVENTION

According to the invention, there is provided a transaction processing method comprising the steps of accessing a transaction ASP and performing an action, characterised in that,
a host server accesses the transaction ASP and instructs the transaction on behalf of a user.

In one embodiment, the host server instructs the transaction on the transaction ASP in response to a user trigger notification.

In another embodiment, the host server instructs the transaction on the transaction ASP in response to receiving a notification transmitted from a notification ASP.

In a further embodiment, the host server filters a received notification and performs the action only if a pre-set condition is satisfied.

In one embodiment, the host server is initialised by interactively receiving from the user rules to define a trigger condition defining if and when an action should be instructed according to received notifications and storing the condition in a database.

Preferably, the condition specifies a target character string in a message.

In one embodiment, the host server is initialised by recording a sequence of steps for the action, the steps being carried out interactively with the user.

In another embodiment, the action steps involve communication with the transaction ASP.

In one embodiment, the recording stage is carried out in communication with an the transaction ASP using the host server as a proxy.

In another embodiment, the host server substitutes a conventional submit function button with a button for instructing recording of steps on the host server.

In a further embodiment, the host server saves the actual or real function as a temporary input variable.

In one embodiment, the action is purchase of a product or service at an optimum price.

In another embodiment, the action is providing an information message in a desired format.

According to another aspect, the invention provides a transaction processing method comprising the steps of:
a host server recording, in response to user inputs, a sequence of steps for performing a transaction in communication with a transaction server; and
the host server subsequently receiving a notification and automatically playing back the recording to instruct the transaction server on behalf of the user to perform a transaction.

In one embodiment, the notification is received as a wireless data message.

According to another aspect, a host server comprising means for performing host server steps defined above.

In one embodiment, the host server comprises a rule management function comprising means for storing and maintaining rules, and a recording function comprising means for recording rules.

In another embodiment, the host server comprises an event channel comprising means for allowing communication with systems for receiving notifications.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a flow diagram illustrating a transaction processing method of the invention,
Fig. 2 is a sample display illustrating editing of a condition rule;
Fig. 3 is a diagram illustrating creation and use of conditions;
Fig. 4 is a diagram showing changes to references;
Fig. 5 is a diagram showing host server database entries;
Figs. 6 to 9 are diagrams illustrating physical architecture of different servers;
Fig. 10 is a diagram illustrating the server logical architecture; and
Figs. 11 to 14 are flow diagrams illustrating transactions.

### Description of the Embodiments

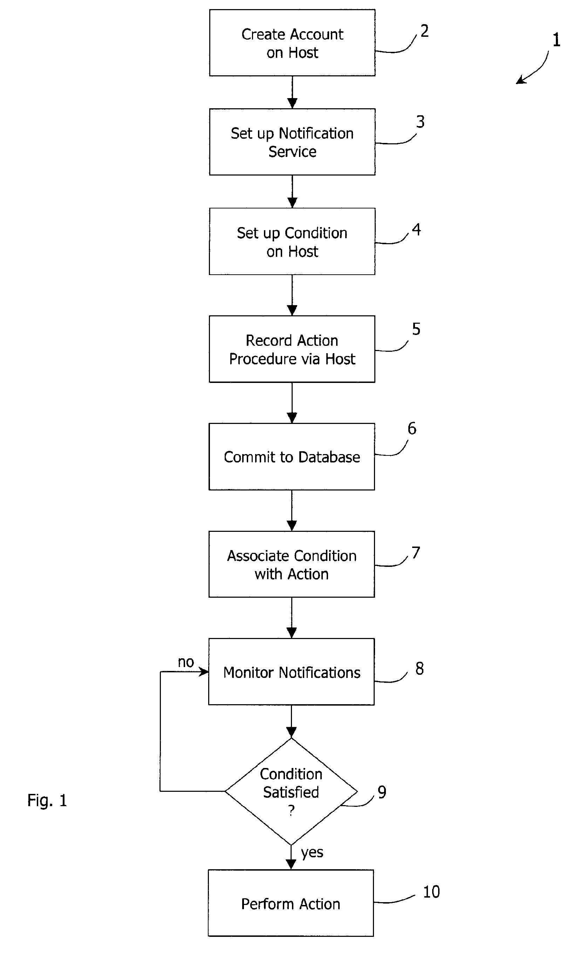

Referring to Fig. 1, a transaction processing method 1 comprises a series of steps 2 to 10 and involve use of a host server which maintains user accounts. For illustrative purposes the host server is named wbrcs.com (Web Based Rule Configuration System). The host server is a Web site.

In step 2 a user creates an account with the host server, and this involves allocating an email address, such as john@wbrcs.com if the user's name is John. This is not used by the user in the normal manner, and instead is used to facilitate transaction processing in accordance with the invention.

In step 3, the user sets up a notification service with an ASP server, such as a website which provides notifications relating to available airline fares. The email address for such notifications is the above address (say, john@wbrcs.com).

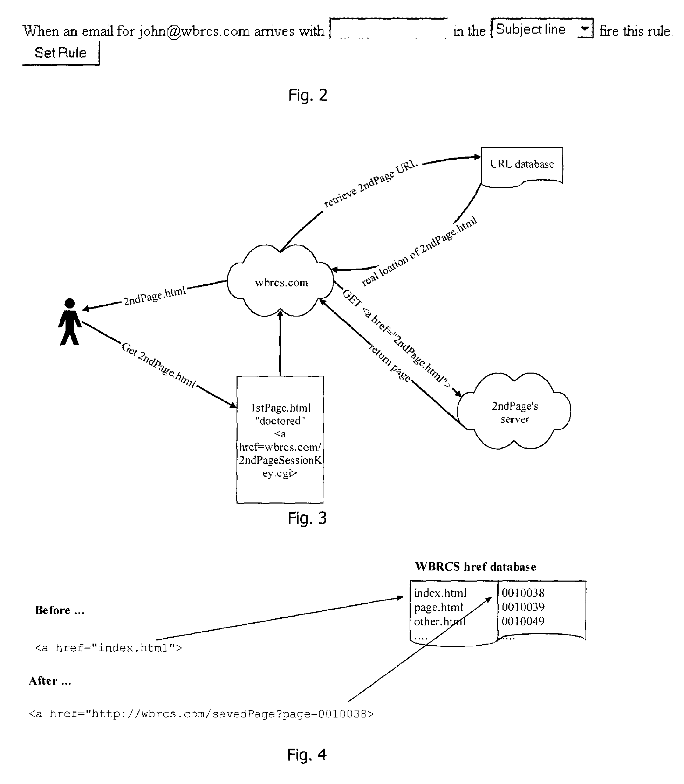

In step 4 the user sets up a condition on the host server. A condition is set up by editing rules using a screen such as that shown in Fig. 2. This rule-editing mechanism is quite easy to use. In the example of transaction processing related to purchase of an airline ticket, the condition may be to filter out messages including the word "travel" in the subject line.

A condition comprises a number of rules defining if and when an action should be triggered. Implementation of this step can be described as follows. When the user accesses at the wbrcs.com web site and logs on for the first time, a system call on the wbrcs server can take the users details such as name and password and create a new account. Once the account has been created, the user can start defining rules. Thereafter a condition checker server will open each user's mailbox regularly and apply the defined rules. To do this the condition checker server parses the email into different sections (Subject Line, Body, Sender etc.). Having done this a simple search can be carried out on any field.

Step 5 involves using the host server to record action steps, which is subsequently committed to a host server database in step 6. Setting up an action is performed using a macro-recorder on the host server. This means that the user will 'step through' the process she wishes to perform so that it can then be 'played back' at a later stage. To create a macro the user enters a URL (Universal Resource Locator) of a service provider site in a form on the WBRCS web site. She then 'surfs' the web carrying out a task. This task will typically involve some CGI (Common Gateway Interface) interaction. For example, should the user want to define a macro for buying a cinema ticket - she would enter the URL of her local cinema - go to the 'buy ticket' page and enter in her credit card details and film she wishes to buy. Upon hitting submit the details would normally be sent to the local cinema to effect the purchase. Instead the details are saved on the WBRCS web site for later user. The following illustrates the operatives involved.

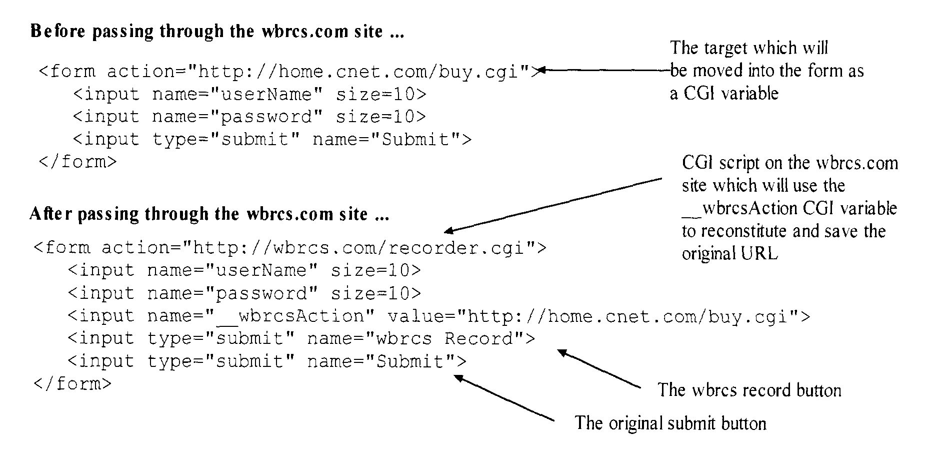

The macro functionality is achieved by using the wbrcs.com web site as a proxy. Instead of entering the URL in the URL directory of the user's web browser, the URLs are entered into the wbrcs.com web site. This allows the site to fetch the URL but before handing it back to the user, doctoring it. The pages which are served to the user are doctored in such a way that when a link or submit button is clicked - the page does not go directly to the intended web site but instead goes through the wbrcs.com web site. There are two ways in which this can happen.
1) The user clicks on a submit button in a form. Before the user receives a form through the wbrcs.com site, the form is edited. A standard CGI file on the wbrcs.com site replaces the form's action attribute value. The old (or 'real') action of the form is stored as a temporary <input> variable in the form. Fig. 3 shows how the form tag is altered. The input variable _wbrcsAction is used to rebuild the action original form once it has been posted to the wbrcs.com/recorder.cgi script. In addition to this an extra 'submit' button is added. It is called 'wbrcs record' in the example on Fig. 3. This button can be used by the user to simply record what will finally happen when the rule is fired without carrying it out at the time of recording. An example of where this might be useful is when we wish to buy a ticket, but not immediately. We only want to buy the ticket when the final rule is fired. When the 'wbrcs record' button is pressed the request is stored in a database for later use (step 6).
   Alternatively, the page being "proxy browsed" can be displayed in a frame at the top of the screen. In the bottom pane, a set of 'recording' buttons allow the user to stop recording whenever they have finished.
2) The user clicks on a <a href="..."> link [2]. In this scenario - the page is parsed to find any anchor links. The href attribute value is removed and stored in a database for later use. It is replaced by a URL which contains the key of the database entry of the file. This is so that the wbrcs.com can keep track of the real page references. This is illustrated in Fig. 4.

Some fields on a web page are time dependant. For example, when booking a cinema ticket, the time of the purchase will be recorded. This means that every time the action is replayed it will purchase a ticket at a specified point in time. In order to facilitate this type of functionality, the host server employs the following technique.

Web pages upon which wbrcs records can contain special tags that can be interpreted by the wbrcs server have special meanings. The following an example of such a tag.

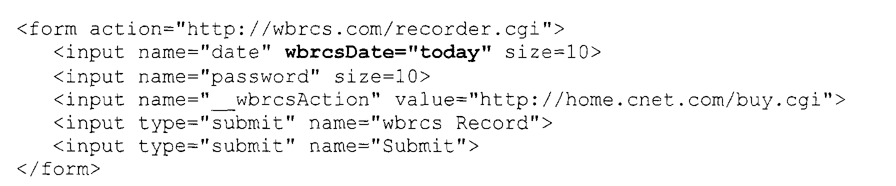

The 'wbrcsDate' field in the above example will be picked up by the wbrcs server before it is passed out to the browser. When that field is submitted, the server will know that this input variable has some special meaning. In this case, the special meaning might be that the date of this field should always be todays date. When this recording is being replayed, the wbrcs server will replace the value entered by the user with what-ever happens to be today's date.

Although the tags can be added in by the developers of individual sites, another approach would be to have the wbrcs server itself add these tags for well known sites. In this implementation, a HTML preprocessor can add in such tags as 'wbrcsDate' for well known sites. In this way, the individual web sites need not necessarily embed proprietary WBRCS tags in the source of their web pages. Instead, these tags are added at run time only when the site is being viewed through wbrcs server.

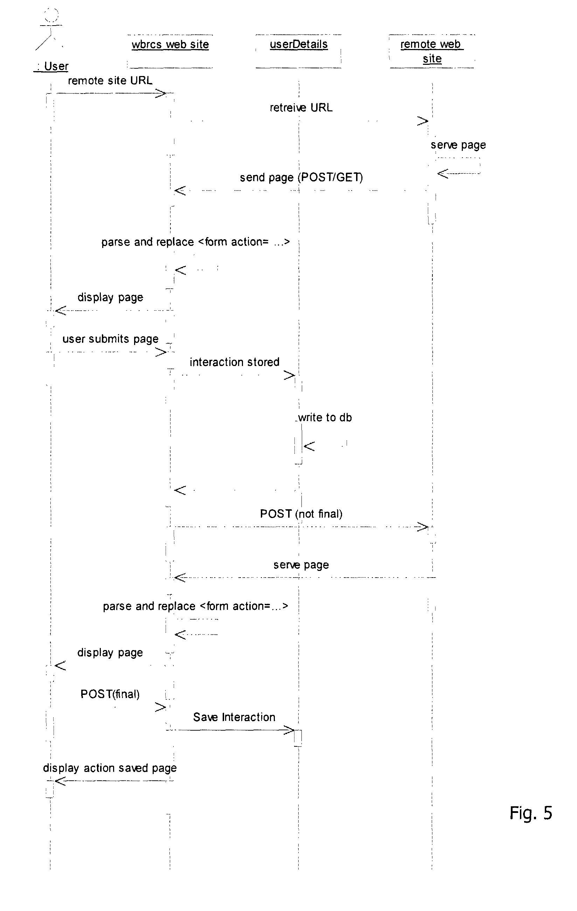

The detailed steps for recording an action are shown in Fig. 5. This clarifies the signal sequence, in which a page is parsed and replaced before being forwarded to the user.

Each recording is saved as an 'Action' in a server database in step 6 and it is later combined with a condition in step 7.

Once the conditions and actions have been set up as described above, the actions are carried out both in an intelligent manner, and automatically in steps 8, 9, and 10. This is extremely convenient for the user. These advantages are achieved for a wide range of types of transaction processing and the following are two examples.

The following are some example scenarios.

### Example A - Buying cheap air-line tickets

Tom wants to buy the cheapest ticket possible to Paris. A number of airlines will drop their air fares on flights which are under-booked. Tom wishes to use the wbrcs.com system to wait until the air fare to Paris has dropped and then buy the ticket at the cheap rate. To do this Tom first goes to the wbrcs.com site and creates an account for tom@wbrcs.com. He then goes to http://www.travelocity.com and uses their 'Fare Watcher E-mail' service to have a mail sent to tom@wbrcs.com when the flight to Paris he wants drops in price. Tom then goes to the wbrcs.com web site and sets up a condition that triggers when a mail from travelocity.com contains 'low fare' in the body. Having completed this, the next step is to record the buying of a ticket. Tom enters the travelocity URL into the wbrcs.com web site. Before the pages are displayed to Tom all of the hrefs and action variables are altered as described above. Tom logs on to the travelocity site using his previously set up details. Tom then selects the ticket purchase options, selects the flight he wants to fly on, and fills out all the necessary credit card details. There are a number of forms to be filled out. On each form there is a submit button and a wbrcs.com 'record' button. Tom does not press any of the wbrcs.com 'record' buttons until he has arrived at the stage of actually purchasing the ticket. Upon pressing the wbrcs.com 'record' button, the wbrcs.com site stops recording and commits all of the steps in the action to a database for later use.

The final step is for Tom to associate the condition he sets up with the action of buying the ticket. Now - as soon as the cheap ticket becomes available, the ticket will be bought at the reduced price.

In this example, the action is automatic purchase at the optimum time.

### Example B - SMS stock ticker notification

Sam is a 'mobile professional'. She spends a lot of her time on the road but has a keen interest in her stock portfolio. She wishes to be notified when her portfolio fluctuates - but isn't always at her desk. She does however carry a GSM mobile phone with her wherever she goes. Sam would like to receive notifications of how her stock is performing - and have the notification sent to her mobile phone. To achieve this, Sam logs into the wbrcs.com web site and sets up an account (sam@wbrcs.com. After this she goes to http://www.webalert.com/. This web site provides e-mail notifications based what a particular stock portfolio is doing at any time. There are a myriad options which can track individual stocks or entire sectors of the market. Sam configures the a notification for "Alert me when the %change in Volume of MSFT is more than 50% in a day". The notification will be sent to sam@wbrcs.com. Returning to the wbrcs.com site - Sam configures a rule to expect a mail from webalert with 'MSFT' and '50%' in the body. Sam now starts an 'Action Configuration' and enters the URL http://members.tripod.lycos.nl/area53/ into the wbrcs.com web site. This site provides free SMS messages. Wbrcs.com retrieves the site but before displaying the page, edits the <Form> tag so that the action attribute is replaced by the wbrcs.com web site script for handling these types of request. Sam enters in her phone number and the message she wishes to receive when the webalert receives (something like "Microsoft is on the move") and submits the form. This form is sent to the wbrcs.com web site and saved in a database. Finally Sam clicks on the 'create new rule' and associates the newly created condition with the action. This means that when webalert sends the wbrcs.com server an e-mail - Sam will in turn receive an SMS on her mobile phone saying 'Microsoft is on the move'. In this example, the action is transmission of the desired information in the desired form (SMS).

### Example C - Mobile Plane Pre-pay Top-up

The wbrcs server can be deployed in order to make it easier to top up pre-paid phones. A parent can record the action of topping up their children's pre-paid phones. Every time the child need more credit in the phone, the parent can just send an SMS and the wbrcs server will re-enact the topping up. In this way the parent has a convenient way in which they can control the amount of money spent on phone calls.

### Example D - Lunch Purchase

The WBRCS can also be used to record buying frequently-used products such as a sandwich. Having made a recording on a web page that sells sandwiches, the user can then send an SMS to trigger that rule, ordering a sandwich.

In the latter two Examples, C and D, the condition rules govern how trigger notifications sent by the user are monitored and interpreted. On the other hand, in Examples A and B, notifications are sent by ASPs and are monitored in a mail box. Thus, actions may be triggered in a number of ways. For example, a user may wish to record buying a sandwich on a site such as "itsonlyfood.com". Having recorded the action rules then the user can replay that recording in a number of ways. Firstly they can activate the recording by sending a message to the server. In one implementation this message would take the form of a SMS message. In this way a user can replay rules while on the move. Secondly, the user can replay the rule by clicking on a list of recordings in the WBRCS site. Lastly, recordings can be replayed from a WAP interface. To do this, a user would connect to the WBRCS WAP site, log in as normal, and be presented with a list of their favourite rules in the form of a menu. To replay a rule, all they have to do is click on it.

Regarding the architecture of the WBRCS server, this comprises a configuration having the following components.
1) **Push Notification Services:** The notification services typically comprise an SMS gateway or a mail daemon. These services will call methods on a RuleEngine as appropriate when a new event occurs.
2) **Rule Engine:** This is responsible for matching up incoming events from the notification services and mapping them to recordings.
3) **Storage Mechanism:** A distributed storage mechanism is employed in order to provided a central place where all of the data in the system can be accessed by the various components described here. The storage mechanism takes the form of a Relational Database Management System (RDBMS).
4) **Application Server:** The application server(s) provide access to the system's UI. In one implementation these servers provide a web-based interface for managing the rules. The user will have to authenticate themselves in order to access and manage their own rules.
5) **Macro Recording Server:** The macro-recording server acts as the component that records the user actions. These are stored in the storage mechanism described above.

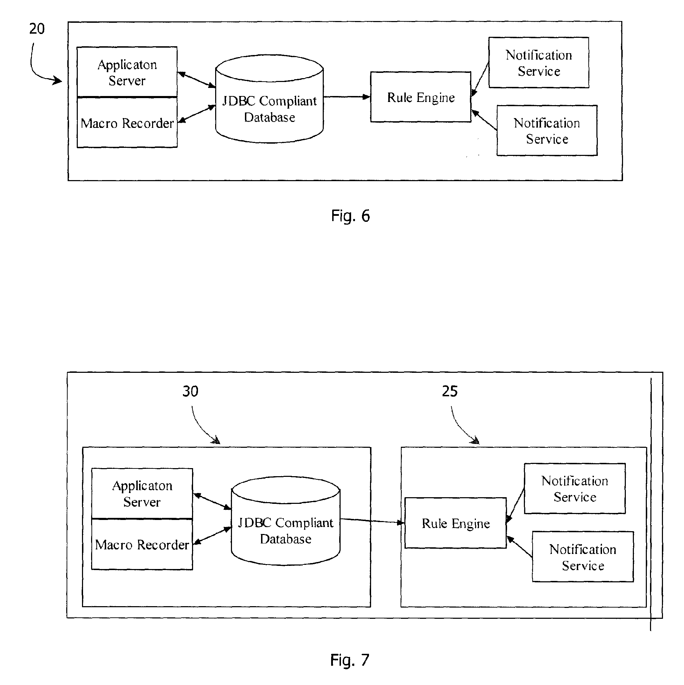

### Configuration 1 (Fig. 6)

All of the components reside on the same hardware platform. The client connects to that platform with his web browser and accesses the service. The notification services (such as SMS) are deployed on the platform also, allowing them direct access to the database. Any equipment specific to notification services (such as an SMS card) are connected to the platform. The macro-recording server also resides on the same platform. This arrangement is shown in Fig. 6, in which the single-platform system is indicated by the numeral 20.

### Configuration 2 (Fig. 7)

In a second configuration, the rule engine and notification services are on a platform 25, while a separate linked platform 30 hosts an application server, a macro recorder, and a JDBC compliant database.

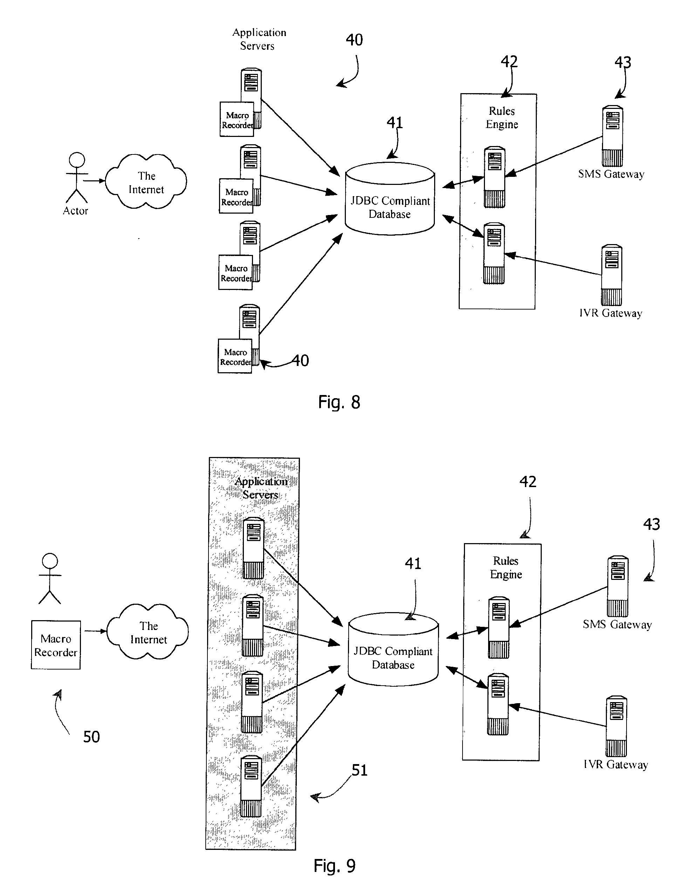

### Configuration 3 (Fig. 8)

This configuration allows the application servers to be completely independent. This configuration still keeps the application server close to the macro recorder. In this implementation the macro-recorder is tightly coupled with the application server. In contrast, the final configuration moves the macro recording function out to the client machine. Referring to Fig. 8, the application servers are indicated by the numeral 40, the database by 41, the rules engine by 42, and the SMS gateways by 43.

### Configuration 4 (Fig. 9)

This configuration differs from the other three in how the macro recorder is implemented. Instead of using the HTML rewriting technique described above, the macro recorder resides on the users' client machine. Recording takes place by monitoring the HTTP requests that are made from the user's browser. When the user starts recording the HTTP requests are gathered on the client machine. When the recording is finished, these http requests are uploaded to the application servers, which will in turn forward the 'session recording' on to the database where the recording will be stored as would any of the recordings would be via any of the other configurations outlined above. This is illustrated in Fig. 9, in which a client system 50 incorporates the macro recorder, and not application servers 51. The other components are as illustrated in Fig. 8.

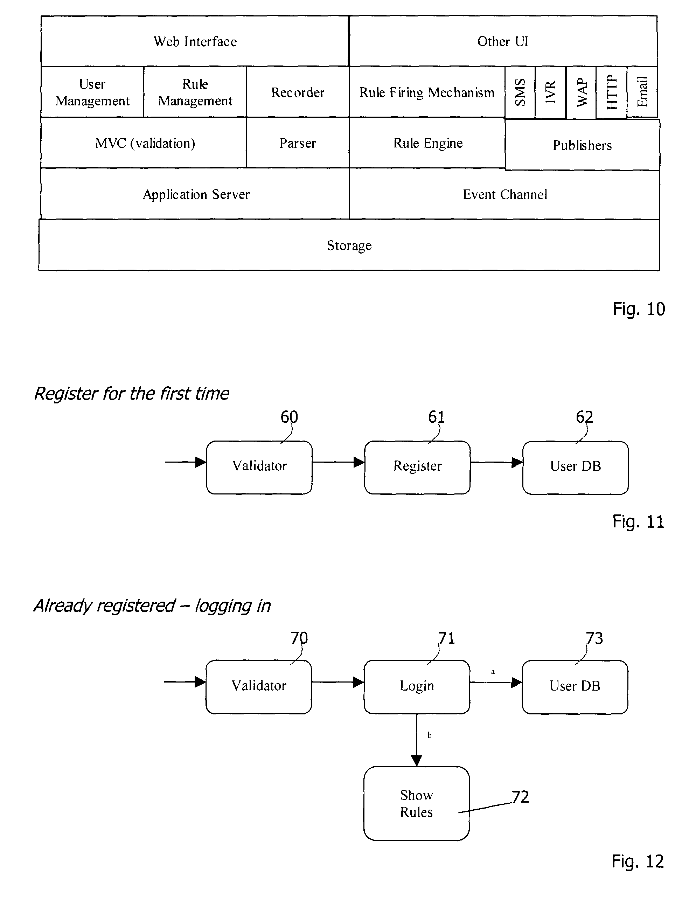

The above sets out various physical architecture configurations. These all have a logical architecture as shown in Fig. 10. At the bottom layer a storage mechanism with a database provides a common base upon which the above services can communicate with. The different components are described below.

**Web Interface:** The web interface consists of a set of HTML pages through which the users and administrators can access an API for managing rules and user specific information.

**User Management:** The user management component provides an API for maintaining the user's details. Functions such as adding, removing and updating user information take place here.

**Rule Management:** The rule management component works tightly with the User Management component to provide storage and maintenance of rules in the database.

**Recorder:** The Recorder takes care of the proxy browsing technique described above and redirects incoming HTTP requests in such a way as to facilitate recording of a web session. The recorder component is specifically concerned with the management of HTTP headers, while the parser deals with HTML/Javascript/CSS parsing.

**Parser:** The parser works to parse and adapt the HTML such that the WBRCS server is always the subject of requests from the browser.

**MVC:** The MVC (Model View Container) component provides a set of tools that make it easier to write and maintain new business logic. Business logic is a term used to describe the various functions of the wbrcs server. For example, 'Login' is business logic that will validate the user against user name and password information in the database. The MVC layer also provides validation of the input, so as to make sure the user does not input invalid values. For example, SMS numbers must begin with 087, 086 or +353.

**Application Server:** The application server hosts the entire service. The application server provides tools and API's for creating dynamically accessible web pages.

**Storage:** The storage layer provides distributed persistent storage. Any relational or object orientated database will suffice.

**Event Channel:** The event channel allows a number of publishers and subscribers to attach to it. The event channel will then distribute events from the publishers to the subscribers. In this way the event channel acts as a multicast mechanism for distributing events. It is used here in order to allow any number of notification services to dynamically attach and start publishing events. In this way various input channels (SMS, WAP, and IVR) can all flow into the RuleEngine and the system can support multiple notification sources transparently.

**Publishers:** Any *push* mechanism can be plugged into this interface so those events from different sources can be routed to the rules engine.

**Rule Engine:** The rule engine connects to the storage mechanism and the event channel and attempts to match up incoming events with rules in the database. In this way, each time an event is detected, the rules engine checks all of the rules in the database and sees if any of the rules are satisfied by the event. For example, an incoming SMS with the content "go" might match a number of rule conditions. If a rule does match then it executes the action of that rule.

**Rule Firing Mechanism**: The rule firing mechanism is used by the RuleEngine to activate successfully matched rules.

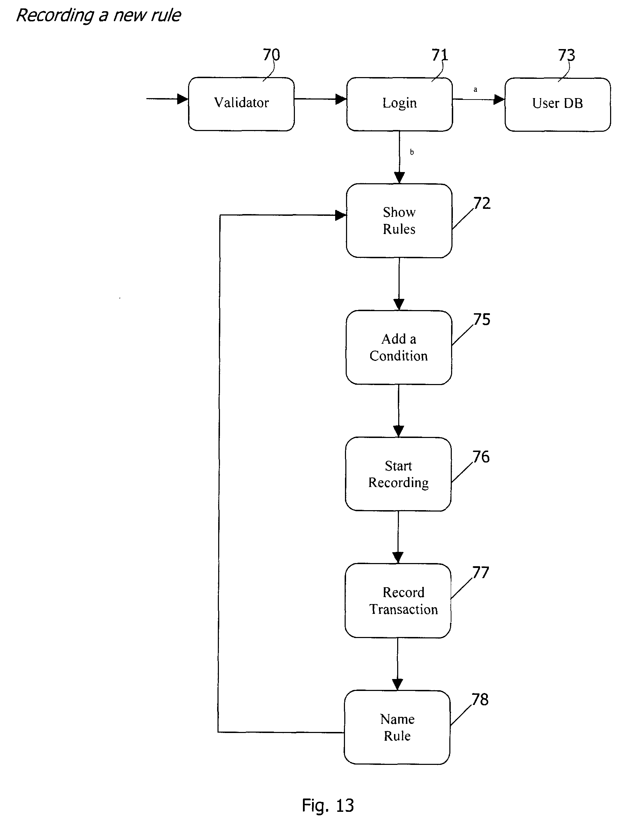

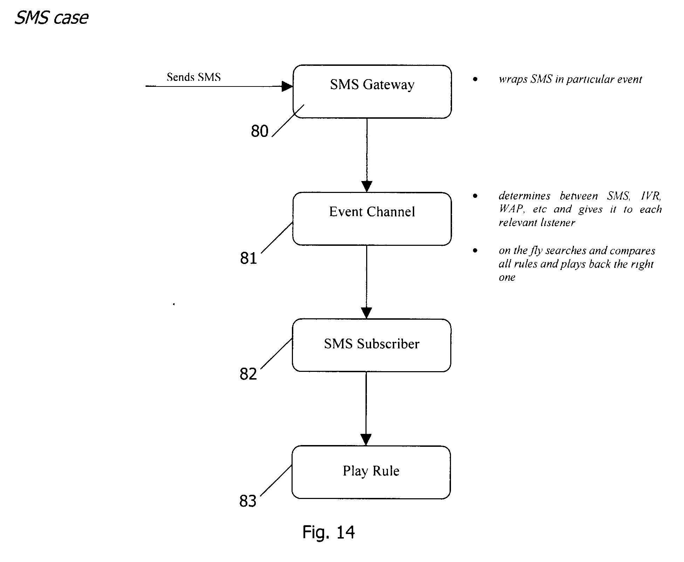

The manner in which the wbrcs host server is used in different scenarios is illustrated in Figs. 11 to 14. For initial registration, there is validation 60, registration 61, and updating 62 the database. Where the user is subsequently logging in, there is validation 70, logging in 71, display 72 of rules, and access 73 to a database. For recording a new rule, there is again validation 70, login 71, and updating 73 the database. The new rule is recorded by displaying the rules in step 72, adding a condition in step 75, starting recording in step 76, recording a transaction in step 77, and finally naming the rule in step 78. As shown in Fig. 14 a service sends an SMS, received in step 80 at the SMS gateway. The SMS is wrapped in an event in this step. In step 81, the host server determines between SMS, IVR, WAP etc and sends the event to each relevant listener. Steps 82 and 83 involve checking actions for the relevant SMS subscriber and performing the action.

The invention is not limited to the embodiments described but may be varied in construction and detail.

## Claims

1. A transaction processing method (1) comprising the steps of accessing a transaction ASP and performing an action, characterised in that,
a host server accesses (10) the transaction ASP and instructs the transaction on behalf of a user.

2. A transaction processing method as claimed in claim 1, wherein the host server instructs the transaction on the transaction ASP in response to a user trigger notification.

3. A transaction processing method as claimed in claim 1, wherein the host server instructs the transaction on the transaction ASP in response to receiving a notification (8) transmitted from a notification ASP.

4. A transaction processing method as claimed in claim 3, wherein the host server filters (8) a received notification and performs the action only if a pre-set condition is satisfied.

5. A transaction processing method as claimed in any preceding claim, wherein the host server is initialised by interactively receiving (4) from the user rules to define a trigger condition defining if and when an action should be instructed according to received notifications and storing the condition in a database (6).

6. A transaction processing method as claimed in claim 5, wherein the condition specifies a target character string in a message.

7. A transaction processing method as claimed in any preceding claim, wherein the host server is initialised by recording (5) a sequence of steps for the action, the steps being carried out interactively with the user.

8. A transaction processing method as claimed in claim 7, wherein the action steps involve communication with the transaction ASP.

9. A transaction processing method as claimed in claims 8, wherein the recording stage is carried out in communication with an the transaction ASP using the host server as a proxy.

10. A transaction processing method as claimed in claim 9, wherein the host server substitutes a conventional submit function button with a button for instructing recording of steps on the host server.

11. A transaction processing method as claimed in claim 10, wherein the host server saves the actual or real function as a temporary input variable.

12. A transaction processing method as claimed in any preceding claim, wherein the action is purchase of a product or service at an optimum price.

13. A transaction processing method as claimed in any of claims 1 to 11, wherein the action is providing an information message in a desired format.

14. A transaction processing method comprising the steps of:
a host server recording, in response to user inputs, a sequence of steps for performing a transaction in communication with a transaction server; and
the host server subsequently receiving a notification and automatically playing back the recording to instruct the transaction server on behalf of the user to perform a transaction.

15. A transaction processing method as claimed in claim 14, wherein the notification is received as a wireless data message.

16. A host server comprising means for performing host server steps claimed in any preceding claim.

17. A host server as claimed in claim 16, wherein the host server comprises a rule management function comprising means for storing and maintaining rules, and a recording function comprising means for recording rules.

18. A host server as claimed in claims 16 or 17, wherein the host server comprises an event channel comprising means for allowing communication with systems for receiving notifications.

19. A computer program product comprising software code for performing the steps of any of claims 1 to 15 when executing on a digital computer.
